(19)

Europäisches Patentamt
European Patent Office
Office européen des brevets

(11) **EP 3 675 390 B1**

(12) **EUROPEAN PATENT SPECIFICATION**

(45) Date of publication and mention
of the grant of the patent:
**14.08.2024  Bulletin 2024/33**

(21) Application number: **18306856.8**

(22) Date of filing: **27.12.2018**

(51) International Patent Classification (IPC):
**H04B 10/079** (2013.01)     **H04B 10/61** (2013.01)
**H04J 14/06** (2006.01)

(52) Cooperative Patent Classification (CPC):
**H04B 10/6162; H04B 10/07955;** H04J 14/06

(54) **MONITORING OPTICAL POWER OF COMMUNICATION SIGNALS USING MANIFESTATIONS OF POLARIZATION-DEPENDENT LOSS AT THE RECEIVER**

ÜBERWACHUNG DER OPTISCHEN LEISTUNG VON KOMMUNIKATIONSSIGNALEN UNTER VERWENDUNG VON ANZEICHEN EINES POLARISATIONSABHÄNGIGEN VERLUSTES BEIM EMPFÄNGER

SURVEILLANCE DE LA PUISSANCE OPTIQUE DE SIGNAUX DE COMMUNICATION À L'AIDE DE MANIFESTATIONS DE PERTE DÉPENDANT DE LA POLARISATION AU NIVEAU DU RÉCEPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.07.2020  Bulletin 2020/27**

(73) Proprietor: **Nokia Solutions and Networks Oy
02610 Espoo (FI)**

(72) Inventors:
• **ROSSI, Nicola
  91620 Nozay (FR)**
• **RAMANTANIS, Petros
  91620 Nozay (FR)**
• **JENNEVE, Philppe
  91620 Nozay (FR)**
• **MUSETTI, Simone
  43124 Parma (IT)**

(74) Representative: **Bryers Intellectual Property Ltd
Bristol & Bath Science Park
Dirac Crescent, Emerson's Green
Bristol, BS16 7FR (GB)**

(56) References cited:
**US-A1- 2013 004 162     US-A1- 2014 023 362
US-A1- 2016 241 341**

EP 3 675 390 B1

**Description**

BACKGROUND

Field

The present disclosure relates to optical communication equipment and, more specifically but not exclusively, to methods and apparatus for monitoring and/or setting the optical power of communication signals.

Description of the Related Art

This section introduces aspects that may help facilitate a better understanding of the disclosure. Accordingly, the statements of this section are to be read in this light and are not to be understood as admissions about what is in the prior art or what is not in the prior art.

Polarization-dependent loss (PDL) is an optical phenomenon due to which two orthogonal polarizations in a fiber-optic link may be subjected to different rates of loss. The effects of PDL are typically time-dependent (e.g. stochastic). Conventionally, PDL is reported as the difference between the maximum and minimum loss among all states of polarization, expressed in decibels.

In optical communications, PDL can degrade the signal quality and system performance. Typical sources of PDL include multiplexers, demultiplexers, couplers, isolators, circulators, switches, fiber imperfections, fiber asymmetries, etc. Loss typically accumulates along the link and causes temporal fluctuations of the signal-to-noise ratio (SNR) at the receiver, which can result in the corresponding variation of the instant bit-error rate (BER).

SUMMARY OF SOME SPECIFIC EMBODIMENTS

Disclosed herein are various embodiments of an optical wavelength-division-multiplexing (WDM) system configured to set the launch power of individual wavelength channels at the transmitter based on statistical characteristics of certain manifestations of PDL observed at the receiver. In an example embodiment, the pertinent effects of PDL are estimated at the receiver based on SNR or BER measurements performed in a polarization-resolved manner. The SNR (or BER) values for the two orthogonal polarizations measured over a sequence of symbol periods are (i) sorted to form a first set by placing therein the lower (or higher) values from each of the symbol periods and (ii) processed to compute a second set having the differences between the higher and the lower values from each of the symbol periods. The variances of the two sets are then used to determine the sign and magnitude of the launch-power adjustment needed to have a nearly optimal launch power for the corresponding wavelength channel.

According to an embodiment, provided is an apparatus comprising: a polarization-sensitive coherent optical receiver that includes an optical hybrid and a plurality of light detectors connected to receive light outputted by the optical hybrid in response to an optical data signal applied thereto, the optical data signal having encoded thereon different respective data streams in each of first and second orthogonal polarizations thereof; and a digital signal processor configured to recover said respective data streams by processing digital samples representing electrical output signals generated by the light detectors in response to the received light; and wherein the digital signal processor comprises a power-regime monitor configured to: compute first and second sets of values representing a measure of transmission quality of the optical data signal in a sequence of symbol periods, the first and second sets corresponding to the first and second orthogonal polarizations, respectively; and determine a launch-power adjustment for the optical data signal using statistical characteristics of the values from said first and second sets wherein the power-regime monitor is configured to determine said statistical characteristics using third and fourth sets of values, the third set having smaller or higher values from the first and second sets in the symbol periods, and the fourth set having differences of the values from the first and second sets in the symbol periods.

According to another embodiment, provided is a machine-implemented optical-power control method comprising the steps of: computing first and second sets of values representing a measure of transmission quality of an optical data signal in a sequence of symbol periods, the optical data signal having encoded thereon different respective data streams in each of first and second orthogonal polarizations thereof, the first and second sets corresponding to the first and second orthogonal polarizations, respectively; converting said first and second sets into third and fourth sets of values, the third set having smaller values from the first and second sets in the symbol periods, and the fourth set having differences of the values from the first and second sets in the symbol periods; and determining a launch-power adjustment for the optical data signal based on variances of the third and fourth sets.

## BRIEF DESCRIPTION OF THE DRAWINGS

Other aspects, features, and benefits of various disclosed embodiments will become more fully apparent, by way of example, from the following detailed description and the accompanying drawings, in which:

FIG. 1 shows a block diagram of an optical communication system according to an embodiment;

FIG. 2 shows a block diagram of an individual-channel optical transmitter that can be used in the optical communication system of FIG. 1 according to an embodiment;

FIG. 3 shows a block diagram of an individual-channel optical receiver that can be used in the optical communication system of FIG. 1 according to an embodiment;

FIG. 4 graphically illustrates example performance characteristics of the optical communication system of FIG. 1 according to an embodiment;

FIG. 5 shows a block diagram of a receiver DSP that can be used in the optical communication system of FIG. 1 according to an embodiment;

FIG. 6 shows a flowchart of a signal-processing method that can be used in the receiver DSP of FIG. 5 according to an embodiment;

FIG. 7 graphically illustrates a step of the signal-processing method of FIG. 6 according to an embodiment; and

FIG. 8 graphically illustrates another step of the signal-processing method of FIG. 6 according to an embodiment.

## DETAILED DESCRIPTION

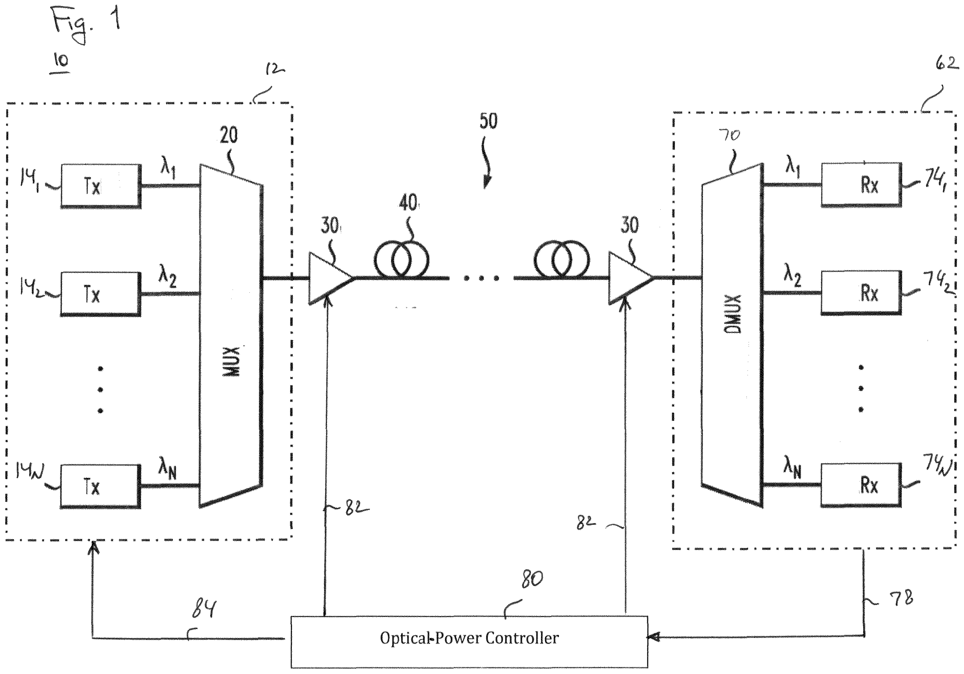

FIG. 1 shows a block diagram of an optical communication system **10** according to an embodiment. System **10** comprises a wavelength-division-multiplexing (WDM) transmitter **12** and a WDM receiver **62** connected using a fiber-optic link **50**.

In some embodiments, system **10** can be used to implement a full duplex (FDX) system that operates to transmit optical signals in one direction on one fiber and in the opposite direction on another fiber. A person of ordinary skill in the art will understand that an FDX system can be implemented, e.g., using two instances (e.g., nominal copies) of system **10**.

In an example to aid understanding of the present invention, system **10** complies with the ITU-T G.709/Y.1331 Recommendation.

In an example embodiment, link **50** can be implemented using two or more spans of optical fiber **40**. In addition, link **50** typically has one or more optical amplifiers **30,** each connected between two respective spans of fiber **40**. Link **50** may also include additional optical elements (not explicitly shown in FIG. 1), such as optical splitters, combiners, couplers, switches, add-drop multiplexers, *etc.,* as known in the pertinent art.

In an example embodiment, an optical amplifier **30** can be implemented as known in the pertinent art, e.g., using an erbium-doped fiber, a gain-flattening filter, and one or more laser-diode pumps. The number of optical amplifiers **30** used in optical link **50** depends on the particular embodiment and may be in the range, e.g., from 1 to ~200. A typical length of the fiber span between two adjacent optical amplifiers **30** may range from ~50 km to ~100 km.

In some embodiments, link **50** may not have any optical amplifiers **30** therein.

In an example embodiment, WDM transmitter **12** and a WDM receiver **62** are configured to use carrier wavelengths $\lambda_1$-$\lambda_N$ arranged on a frequency (wavelength) grid, such as a frequency grid that complies with the ITU-T G.694.1 Recommendation. The frequency grid used in system **10** can

be defined, e.g., in the frequency range from about 186 THz to about 201 THz, with a 100, 50, 25, or 12.5-GHz spacing of the channels therein. While typically defined in frequency units, the parameters of the grid can equivalently be expressed in wavelength units. For example, in the wavelength range from about 1528.8 nm to about 1563.9 nm, the 100-GHz spacing between the centers of neighboring WDM channels is equivalent to approximately 0.8 nm spacing. In alternative embodiments, other suitable frequency grids (e.g., flexible or having other spacing grids) can also be used.

In an example embodiment, system **10** can be configured to transport polarization-division-multiplexed (PDM) signals, wherein each of the two orthogonal polarizations of each optical WDM channel can be used to carry a different respective data stream.

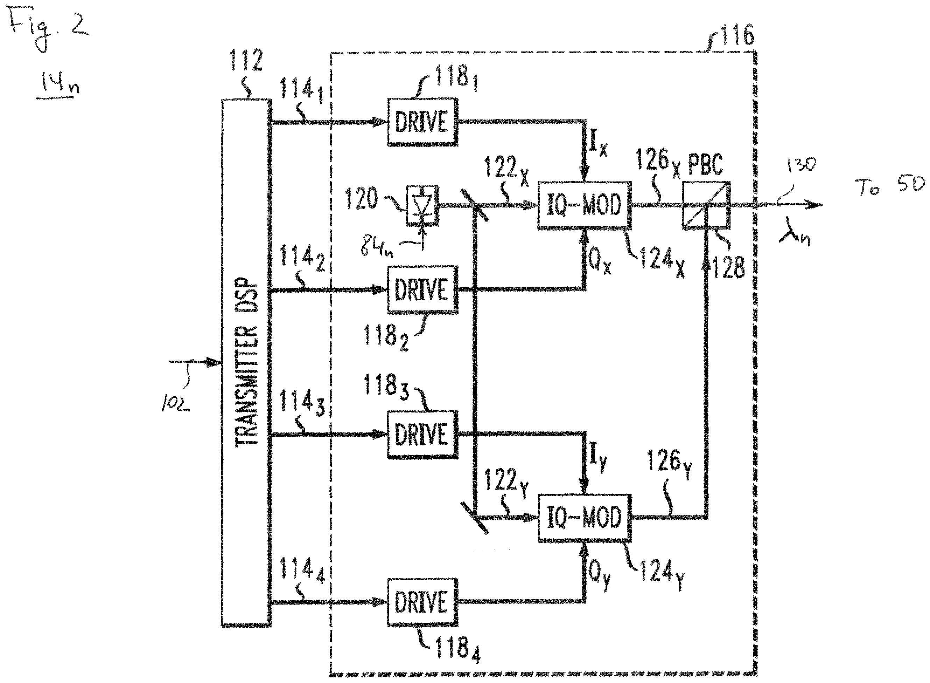

In an example embodiment, WDM transmitter **12** comprises N individual-channel optical transmitters $14_1$-$14_N$, where the number N is an integer greater than one. An example embodiment of transmitter **14** is described in more detail below in reference to FIG. 2. In operation, each of optical transmitters $14_1$-$14_N$ generates a respective WDM component of the optical output signal using a different respective carrier wavelength (e.g., one of wavelengths $\lambda_1$-$\lambda_N$, as indicated in FIG. 1). A multiplexer (MUX) **20** then operates to combine these WDM components, thereby generating the optical output signal that is applied to fiber **40** for transmission to WDM receiver **62**. Along the propagation path, the transmitted optical signal is amplified using optical amplifiers **30**.

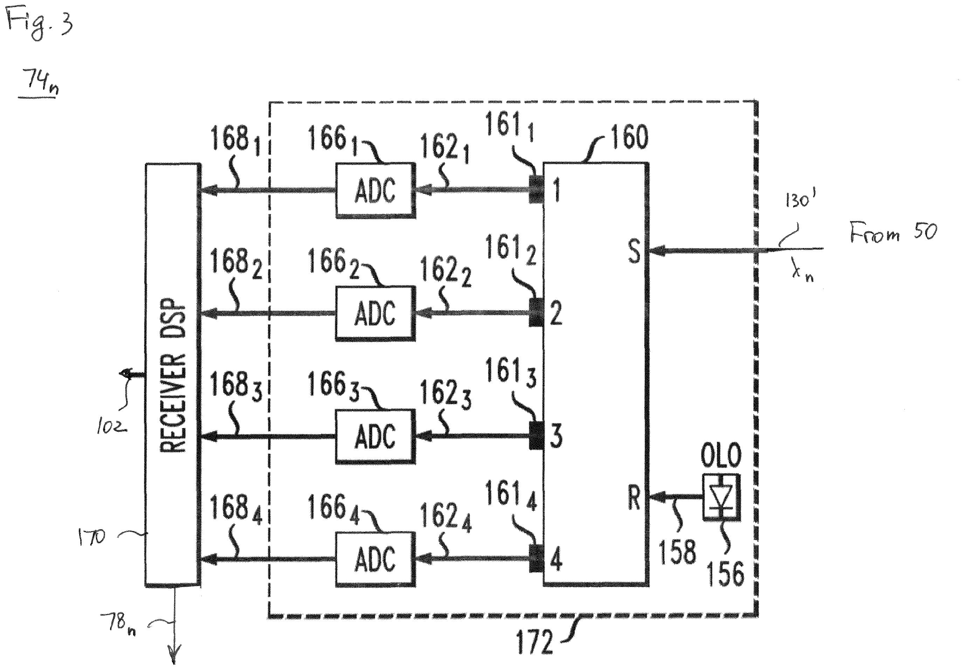

WDM receiver **62** comprises N individual-channel optical receivers $74_1$-$74_N$. An example embodiment of receiver **74** is described in more detail below in reference to FIG. 3. In operation, each of optical receivers $74_1$-$74_N$ detects and decodes a respective WDM component of the optical signal received by way of link **50** from WDM transmitter **12**. A demultiplexer (DMUX) **70** operates to separate the WDM components of the received optical signal, thereby generating optical input signals for the optical receivers channel optical receivers $74_1$-$74_N$.

In an example to aid understanding of the present invention, each of MUX **20** and DMUX **70** can be implemented as known in the pertinent art, e.g., using one or more of the following: (i) a wavelength-selective optical filter; (ii) a wavelength-selective switch; (iii) a diffraction grating; (iv) an array of micro-mirrors; (v) a MEMS device; and (vi) an LCoS filter or modulator. Herein, the acronym "MEMS" refers to micro-electro-mechanical systems; and the acronym "LCoS" refers to liquid crystal on silicon.

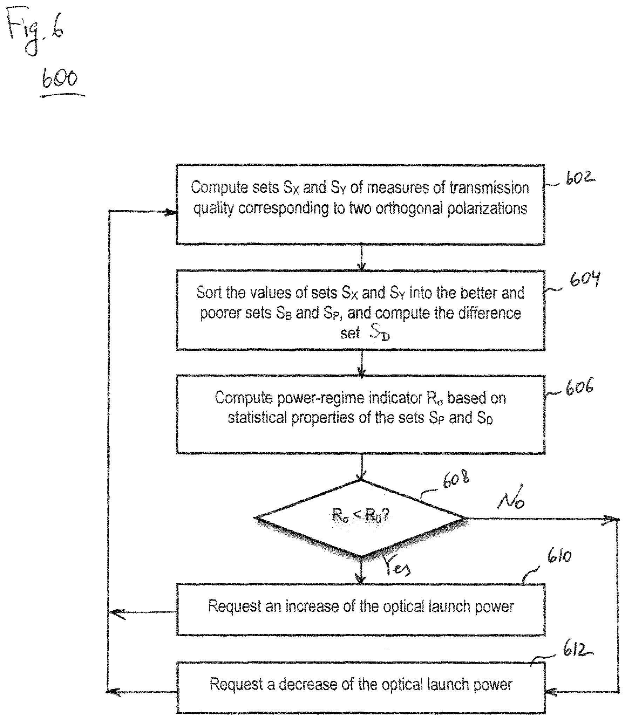

System **10** further comprises an optical-power controller **80** configured to generate a control signal **84** and, optionally, one or more control signals **82**. Control signal **84** is applied to WDM transmitter **12** and used therein to set and/or change the output optical power of at least some laser sources (not explicitly shown in FIG. 1, see FIG. 2) used in individual-channel optical transmitters $14_1$-$14_N$. Each control signal **82** can be applied to a respective one of optical amplifiers **30** to set and/or change the optical gain thereof. In operation, optical-power controller **80** generates control signals **82** and **84** in response to a feedback signal **78** received from WDM receiver **62**. Feedback signal **78** is a multicomponent signal, different components of which are generated by different ones of the individual-channel optical transmitters $14_1$-$14_N$, (e.g., as described in more-detail below in reference to FIG. 6) using the respective PDL statistics observed thereat.

FIG. 2 shows a block diagram of an individual-channel optical transmitter $14_n$ that can be used in system **10** (FIG. 1) according to an embodiment, where n=1, 2, ..., N.

In operation, transmitter **14** receives a digital electrical input stream 102 of payload data and applies it to a digital signal processor (DSP) **112**. DSP **112** processes input data stream **102** to generate digital signals $114_1$-$114_4$. In an example embodiment, DSP **112** may perform, *inter alia,* one or more of the following: (i) de-multiplex input stream **102** into two sub-streams, each intended for optical transmission using a respective one of orthogonal (e.g., X and Y) polarizations of an optical output signal **130;** (ii) encode each of the sub-streams using a suitable code, e.g., to prevent error propagation and enable error correction at receiver **190;** (iii) convert each of the two resulting sub-streams into a corresponding sequence of constellation symbols; and (iv) perform digital signal pre-distortion, e.g., to mitigate the adverse effects imposed by an electrical-to-optical (E/O) converter (also sometimes referred to as a front-end circuit) **116** of transmitter **110,** optical transport link **140,** and/or a front-end circuit **172** of receiver $74_n$ (see FIG. 3). In each signaling interval (also referred to as a symbol period or time slot), signals $114_1$ and $114_2$ carry digital values that represent the in-phase (I) component and quadrature (Q) component, respectively, of a corresponding (possibly pre-distorted) constellation symbol intended for transmission using a first (e.g., X) polarization of light. Signals $114_3$ and $114_4$ similarly carry digital values that represent the I and Q components, respectively, of the corresponding (possibly pre-distorted) constellation symbol intended for transmission using a second (e.g., Y) polarization of light.

E/O converter **116** operates to transform digital signals $114_1$-$114_4$ into a corresponding modulated optical output signal **130**. More specifically, drive circuits $118_1$ and $118_2$ transform digital signals $114_1$ and $114_2$, as known in the art, into electrical analog drive signals $I_X$ and $Q_X$, respectively. Drive signals $I_X$ and $Q_X$ are then used, in a conventional manner, to drive an I-Q modulator **124x**. In response to drive signals $I_X$ and $Q_X$, I-Q modulator $124_X$ operates to modulate an X-polarized beam $122_X$ of light supplied by a laser source **120** as indicated in FIG. 1, thereby generating a modulated optical signal **126X.**

The output wavelength of laser source **120** is wavelength $\lambda_n$. The optical output power of laser source **120** can be set and/or changed in response to a corresponding component $84_n$ of control signal **84** (also see FIG. 1).

Drive circuits $118_3$ and $118_4$ similarly transform digital signals $114_3$ and $114_4$ into electrical analog drive signals $I_Y$ and $Q_Y$, respectively. In response to drive signals $I_Y$ and $Q_Y$, an I-Q modulator $124_Y$ operates to modulate a Y-polarized beam $122_Y$ of light supplied by laser source **120** as indicated in FIG. 1, thereby generating a modulated optical signal $126_Y$. A polarization beam combiner **128** operates to combine modulated optical signals $126_X$ and $126_Y$, thereby generating optical output signal **130,** this optical output signal being a polarization-division-multiplexed (PDM) signal. Optical output signal **130** is then applied to optical transport link **140.**

FIG. 3 shows a block diagram of an individual-channel optical receiver $74_n$ that can be used in system **10** (FIG. 1) according to an embodiment, where n=1, 2, ..., N.

After propagating through link **50,** optical signal **130** (see FIG. 2) becomes optical signal **130",** which is applied to receiver $74_n$. Optical signal **130"** may differ from optical signal **130** because optical transport link **50** typically adds noise and imposes various linear and nonlinear signal distortions. The linear distortions may be caused, e.g., by chromatic dispersion (CD), polarization mode dispersion (PMD), and the above-mentioned PDL. The nonlinear distortions may be caused, e.g., by the Kerr effect, including one or more of self-phase modulation (SPM), cross-phase modulation (XPM), and four-wave mixing (FWM).

Front-end circuit **172** of receiver **190** comprises an optical hybrid **160**, light detectors $161_1$-$161_4$, analog-to-digital converters (ADCs) $166_1$-$166_4$, and an optical local-oscillator (OLO) source **156**. Optical hybrid **160** has (i) two input ports labeled **S** and **R** and (ii) four output ports labeled **1** through **4.** Input port **S** receives optical signal **130"** from optical link **50.** Input port **R** receives an OLO signal **158** generated by OLO source **156.** OLO signal **158** has an optical-carrier wavelength (frequency) that is sufficiently close to that of signal **130"** to enable coherent (e.g., intradyne) detection of the latter signal. OLO signal **158** can be generated, e.g., using a relatively stable tunable laser whose output wavelength (frequency) is approximately the same as the carrier wavelength (frequency) of optical signal **130.**

In an example embodiment, optical hybrid **160** operates to mix input signal **130"** and OLO signal **158** to generate different mixed (e.g., by interference) optical signals (not explicitly shown in FIG. 3). Light detectors $161_1$-$161_4$ then convert the mixed optical

signals into four electrical signals $162_1$-$162_4$ that are indicative of complex values corresponding to two orthogonal-polarization components of signal **130".** For example, electrical signals $162_1$ and $162_2$ may be an analog I signal and an analog Q signal, respectively, corresponding to a first (e.g., horizontal, h) polarization component of signal **130".** Electrical signals $162_3$ and $162_4$ may similarly be an analog I signal and an analog Q signal, respectively, corresponding to a second (e.g., vertical, v) polarization component of signal **130".** Note that the orientation of the h and v polarization axes at receiver $74_n$ may not coincide with the orientation of the X and Y polarization axes at transmitter $14_n$.

Each of electrical signals $162_1$-$162_4$ is converted into digital form in a corresponding one of ADCs $166_1$-$166_4$. Optionally, each of electrical signals $162_1$-$162_4$ may be amplified in a corresponding electrical amplifier (not explicitly shown) prior to the resulting signal being converted into digital form. Digital signals $168_1$-$168_4$ produced by ADCs $166_1$-$166_4$ are then processed by a DSP **170** to: (i) recover the data of the original input data stream **102** applied to transmitter $14_n$, and (ii) generate a corresponding component $78_n$ of control signal **78** (also see FIG. 1).

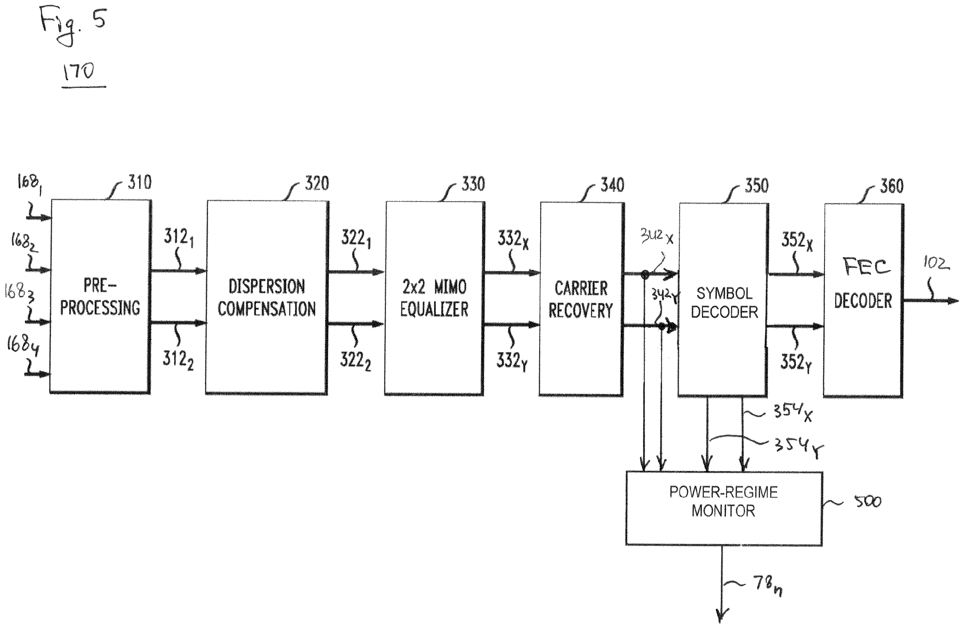

In an example embodiment, DSP **170** may perform, *inter alia,* one or more of the following: (i) signal processing directed at dispersion compensation; (ii) signal processing directed at compensation of nonlinear distortions; (iii) electronic polarization demultiplexing; and (iv) error correction based on the data encoding applied at DSP **112.** Example embodiments of DSP **170** are described in more detail below in reference to FIGs. 5-8.

In some embodiments, at least some of the signal processing directed at dispersion compensation and/or compensation of nonlinear distortions can be performed at DSP **112** instead of being performed at DSP **170.** In this case, this signal processing can be used to pre-distort optical output signal **130** in a manner that causes optical signal **130"** to be less distorted than in the absence of this pre-distortion.

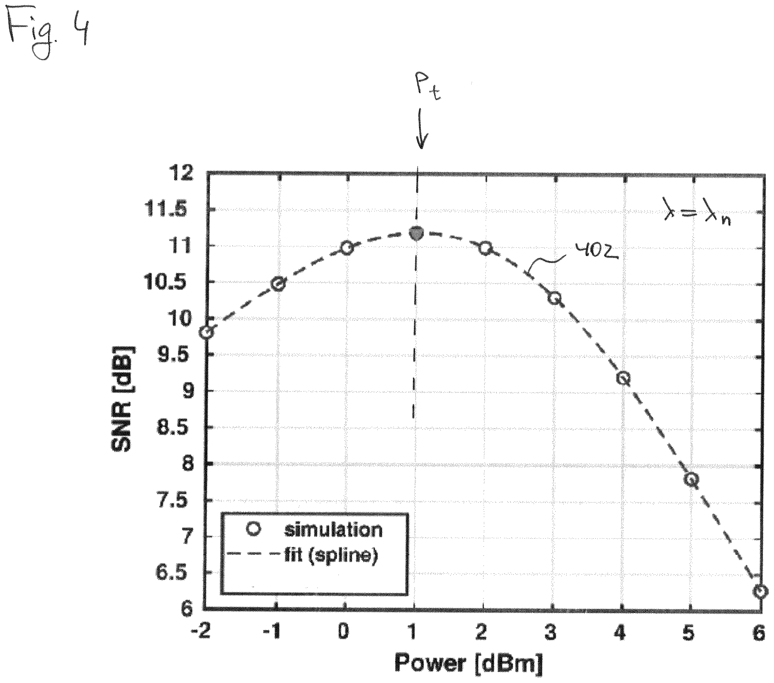

FIG. 4 graphically illustrates example performance characteristics of system **10** according to an embodiment. More specifically, a curve **402** in the graph of FIG. 4 represents an example dependence of the SNR measured at optical receiver $74_n$ as a function of output optical power of laser **120** of the corresponding transmitter $14_n$. Curve **402** has a maximum at the output power Pt. At the optical power levels that are below Pt, the SNR generally increases with an increase of the laser output power. At the optical power levels that are above $P_t$, the SNR generally decreases with an increase of the laser output power, primarily due to the increasing detrimental contributions of nonlinear optical effects in link **50.**

Target characteristics of a transmitter/receiver pair that communicate with one another over link **50** can be specified using a range of the optical power values around the output power $P_t$. Typically, the upper and/or lower bounds of this range are the design and/or configuration parameters of system **10** that may be selected and/or specified by the system operator based on the intended use of the system and target performance characteristics.

A person of ordinary skill in the art will understand that the use of the SNR represents only one of many possible ways of attaining a desired (e.g., optimal) configuration of system **10.** For example, in an alternative embodiment, the quality factor $Q^2$ or the bit error rate (BER) can similarly be used. In some other embodiments, other suitable measures of transmission quality can alternatively be used.

The BER is the most-direct indicator of the transmission quality. For example, due to the adverse effects of noise, nonlinearities, and dispersion, the waveforms of optical signals coupled into fibers typically become distorted when those optical signals arrive at the remote end of the fiber-optic link, such as link **50.** As a result, bit errors are typically present when the receiver converts the optical signals into the corresponding electrical signals and then decodes the latter. A greater number of pre-FEC bit errors is therefore an indication of the poorer transmission quality, and *vice versa.*

For example, for PDM-QPSK modulation, the BER can be computed from the SNR as follows:

$$BER = \frac{1}{2}\text{erfc}\left(\sqrt{\frac{SNR}{2}}\right) \qquad (1)$$

The quality factor $Q^2$ and BER have a one-to-one correspondence that can be expressed, e.g., as follows:

$$BER = \frac{1}{2}\text{erfc}\left(\frac{Q}{\sqrt{2}}\right) \approx \frac{1}{\sqrt{2\pi}Q}\exp\left(-\frac{Q^2}{2}\right) \qquad (2)$$

where

$$Q(dB) - 10\log_{10}(Q^2).$$

In an example embodiment, Eqs. (1)-(2) can be used to program controller **80** and/or DSP **170** to interconvert various possible quantitative measures of the end-to-end transmission performance of a wavelength channel in system **10.**

As used herein below, the term "measure of transmission quality" should be construed to cover each and any of: (i) the quality factor $Q^2$; (ii) the Q value expressed in decibel; (iii) the BER, e.g., expressed as the number of FEC-code-corrected errors per data frame; and (iv) the SNR. These quantities can be inter-converted, e.g., in the above-explained manner. Furthermore, the term "measure of transmission quality" should also be construed to cover any other value or quantity that can be unambiguously mapped onto any one of those parameters. One or more of such "measures of transmission quality" (e.g., one per carrier wavelength, per transmission direction) can be used to generate control signals **78, 82,** and **84** in system **10,** e.g., as further explained below.

FIG. 5 shows a block diagram of DSP **170** (FIG. 3) according to an embodiment. Digital signals **168₁-168₄,** output data stream **102,** and control signal **78ₙ** are also shown in FIG. 5 to better illustrate the relationship between the circuits shown in FIGs. 3 and 5.

Ideally, digital signals **168₁** and **168₂** represent the I and Q components, respectively, of the horizontal polarization component of optical signal **130',** and digital signals **168₃** and **168₄** represent the I and Q components, respectively, of the vertical impairments, front-end implementation imperfections, and configuration inaccuracies generally cause each of digital signals **168₁-168₄** to be a convoluted signal that has various linear and nonlinear distortions and/or contributions from both of the original PDM components **126ₓ** and **126ᵧ** (see FIG. 2). The signal-processing chain of DSP **170** is generally directed at reducing the adverse effects of some signal distortions and de-convolving digital signals **168₁-168₄** so that the transmitted data can be properly recovered to generate the output data stream **102** with an acceptably low BER.

In an example embodiment, DSP **170** comprises a signal-pre-processing module **310** configured to receive digital signals **168₁-168₄.** One of the functions of module **310** may be to adapt the signal samples received via digital signals **168₁-168₄** to a form that is more suitable for the signal-processing algorithms implemented in the downstream modules of DSP **170.** For example, module **310** may be configured to (i) resample digital signals **252₁-252₄** such that each of these signals carries two samples per symbol period and/or (ii) convert real-valued signal samples into the corresponding complex-valued signal samples. The resulting complex-valued digital signals generated by signal-pre-processing module **310** are labeled **312₁-312₂.**

Complex-valued digital signals **312₁** and **312₂** are applied to a dispersion-compensation module **320** for dispersion-compensation processing therein, and the resulting dispersion-compensated signals are complex-valued digital signals **322₁-322₂.** For example, the total amount of chromatic dispersion, $CD_t$, compensated by dispersion-compensation module **320** can be expressed as follows:

$$CD_t = D_e \times L_0 \qquad (3)$$

where $D_e$ is the effective dispersion coefficient; and $L_0$ is the total length of optical fiber **40** used in link **50.** Example circuits that can be used to implement dispersion-compensation module **320** are disclosed, e.g., in U.S. Patent Nos. 8,260,154, 7,636,525, 7,266,310.

Digital signals **322₁** and **322₂** are applied to a 2×2 MIMO (multiple-input/multiple-output) equalizer **330** for MIMO-equalization processing therein, and the resulting equalized signals are complex-valued digital signals **332ₓ** and **332ᵧ.** In an example embodiment, equalizer **330** can be a butterfly equalizer configured to perform electronic polarization demultiplexing. Example 2×2 MIMO equalizers that can be used to implement equalizer **330** are disclosed, e.g., in U.S. Patent No. 9,020,364 and U.S. Patent Application Publication No. 2015/0372764.

Digital signals **332ₓ** and **332ᵧ** generated by equalizer **330** are applied to a carrier-recovery module **340** that is configured to perform signal processing generally directed at (i) compensating the frequency mismatch between the carrier frequencies of optical LO signal **158** and input signal **130'** and/or (ii) reducing the effects of phase noise. Various signal-processing techniques that can be used to implement the frequency-mismatch-compensation processing in carrier-recovery module **340** are disclosed, e.g., in U.S. Patent Nos. 7,747,177 and 8,073,345. Example signal-processing techniques that can be used to implement phase-error- correction processing in carrier-recovery module **340** are disclosed, e.g., in U.S. Patent No. 9,112,614.

Digital signals **342$_X$** and **342$_Y$** generated by carrier-recovery module **340** are applied to a symbol decoder **350** that converts these digital signals into data streams **352$_X$** and **352$_Y$,** respectively. In an example embodiment, symbol decoder **350** is configured to use the complex values conveyed by digital signals **342$_X$** and **342$_Y$** to appropriately map each complex value onto the operative constellation to determine the corresponding received symbol and, based on said mapping, determine the corresponding bit-word encoded by the symbol. Symbol decoder **350** then appropriately multiplexes and concatenates the determined bit-words to generate data streams **352$_X$** and **352$_Y$.**

Symbol decoder **350** is further configured to provide each of the determined received symbols to a power-regime monitor **500** by way of digital signals **354$_X$** and **354$_Y$.** Each of such determined received symbols is typically represented by a respective complex value corresponding to the location of the corresponding constellation point on the I-Q plane. Digital signals **354$_X$** and **354$_Y$** are generated to carry the complex values of the constellation points onto which the complex values supplied by digital signals **342$_X$** and **342$_Y$,** respectively, are mapped by symbol decoder **350.**

An FEC decoder **360** is configured to perform forward-error-correction (FEC) processing using data redundancies (if any) in the data carried by the corresponding optical signal **130**. The error-corrected data stream generated by FEC decoder **360** is the output data stream **102.**

Power-regime monitor **500** operates to process digital signals **342$_X$**, **342$_Y$**, **354$_X$** and **354$_Y$** to generate control signal **78$_n$,** e.g., as described in more detail below. For example, power-regime monitor **500** may be configured to implement the signal-processing method shown and described in reference to FIG. 6.

Typically, DSP **170** also includes a clock-recovery circuit (not explicitly shown in FIG. 5). In some embodiments, the clock-recovery circuit may be directly inserted into the data-recovery chain of DSP **170,** e.g., between equalizer **330** and carrier-recovery module **340.** In some other embodiments, the clock-recovery circuit may be connected in a feedback configuration outside the direct data-recovery chain of DSP **170,** with the feedback being provided to signal-pre-processing module **310,** a signal interpolator (not explicitly shown in FIG. 5), or ADCs **166.** Example clock-recovery circuits that can be used for this purpose are disclosed, e.g., in U.S. Patent No. 9,762,379.

FIG. 6 shows a flowchart of a signal-processing method **600** that can be used in power-regime monitor **500** according to an embodiment. Method **600** enables power-regime monitor **500** to generate control signal **78$_n$** in response to digital signals **342$_X$,** **342$_Y$,** **354$_X$** and **354$_Y$** (also see FIG. 5).

At step **602,** power-regime monitor **500** operates to compute two sets of measures of transmission quality. The first set, denoted as S$_X$, corresponds to the X-polarization and contains K values of the measure of transmission quality $\Psi^{(X)}$, i.e., $S_X = \{\Psi_k^{(X)}\}_{k=1, ..., K}$, where the index k denotes different symbol periods. The second set, denoted as S$_Y$, corresponds to the Y-polarization and contains K values of the measure of transmission quality $\Psi^{(Y)}$, i.e., $S_Y = \{\Psi_k^{(Y)}\}_{k=1, ..., K}$. The number K can be, e.g., in the range between 10 and 1000. As already indicated above, in different embodiments, the measure of transmission quality $\Psi$ can be any of: (i) the quality factor Q$^2$; (ii) the Q value expressed in decibel; (iii) the BER; and (iv) the SNR.

In each of the K symbol periods, $\Psi_k^{(X)}$ is computed using the complex values supplied by digital signals **342$_X$** and **354$_X$,** and $\Psi_k^{(Y)}$ is similarly computed using the complex values supplied by digital signals **342$_Y$** and **354$_Y$.**

For example, in an embodiment in which the measure of transmission quality $\Psi$ is the SNR, the computations of step **602** can be performed in accordance with Eq. (4a):

$$SNR = \frac{|Z_c|}{\left|\dfrac{Z_s}{}\right|} \tag{4a}$$

where $Z_c$ is the complex value supplied in the corresponding symbol period by digital signal **354$_X$** (or **354$_Y$**); and $Z_s$ is the complex value supplied in the corresponding symbol period by digital signal **342$_X$** (or **342$_Y$**). In alternative embodiments, Eq. (4) can be appropriately modified, e.g., using Eqs. (1) and (2).

In another embodiment in which the measure of transmission quality $\Psi$ is the SNR, the computations of step **602** can be performed in accordance with Eq. (4b):

$$SNR = \frac{P_{s+n} - P_n}{P_n} \tag{4b}$$

where $P_{s+n}$ is the measured received power of the signal corrupted by noise; and $P_n$ is the noise power extracted from the scatter of the signal points around the respective decision points. Said scatter can be determined, e.g., by processing digital signals $342_X$ and $354_X$ and digital signals $342_Y$ and $354_Y$ over a sequence of time slots as known in the pertinent art.

A person of ordinary skill in the art will understand that, in other embodiments, other suitable implementations of step **602** are also possible.

At step **604**, power-regime monitor **500** operates to convert the sets $S_X$ and $S_Y$ into the corresponding sets $S_P$ and $S_D$. More specifically, the set $S_P$ is generated by sorting the pair of values $\Psi_k^{(X)}$ and $\Psi_k^{(Y)}$ for each k into the better one and the poorer one, with the poorer one then being placed into the set $S_P$. The set $S_D$ is generated by computing the difference between the better and poorer values for each k.

The meaning of the terms "better" and "poorer" depends on the embodiment. For example, in the embodiment in which the measure of transmission quality $\Psi$ is the SNR, the better SNR is the larger one of the two values, and the poorer SNR is the smaller one of the two values. In contrast, in the embodiment in which the measure of transmission quality $\Psi$ is the BER, the better BER is the smaller one of the two values, and the poorer BER is the larger one of the two values.

Under typical operating conditions, the manifestations of PDL observed at receiver $74_n$ cause the set $S_P$ to contain values from both of the sets $S_X$ and $S_Y$.

At step **606**, power-regime monitor **500** operates to evaluate the statistical properties of the sets $S_P$ and $S_D$ generated at step **604**.

In an example embodiment, the evaluation may be based on the variance values corresponding to the sets $S_P$ and $S_D$. These variance values can be used, e.g., to compute a power-regime indicator, $R_\sigma$ that can then be used to determine the launch-power change (if any) that can place the corresponding WDM channel into better (e.g., more-optimal) operating conditions.

As used herein, the term "variance" refers to the expectation of the squared deviation of a random variable from its mean. The variance value provides a measure of how far the (random) numbers of a set are spread out from their average value. Mathematically, the variance can be defined as the square of the standard deviation determined over a statistically sufficient set of data.

In an example embodiment, power-regime monitor **500** can implement step **606** by computing the power-regime indicator $R_\sigma$ in accordance with Eq. (5):

$$R_f = \sqrt{\frac{\mathrm{var}(S_P)}{\mathrm{var}(S_D)}} \qquad (5)$$

where "var" denotes the mathematical function of variance.

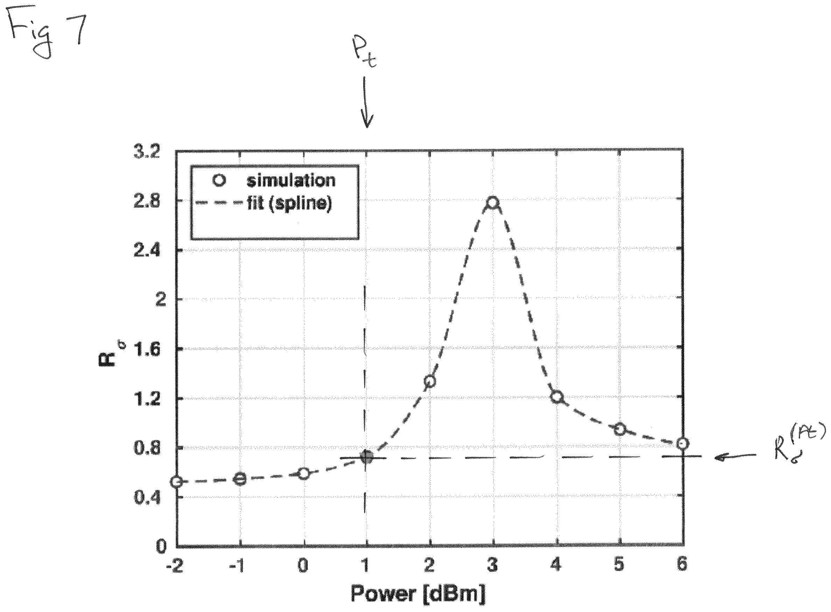

FIG. 7 graphically illustrates an example dependence of the power-regime indicator $R_\sigma$ (computed at step **606**, FIG. 6) on the signal launch power at transmitter $14_n$ according to an embodiment. More specifically, the results shown in FIG. 7 correspond to an embodiment in which the measure of transmission quality $\Psi$ is the SNR. The corresponding link **50** includes 24 spans of standard single-mode fiber and 20 PDL-causing elements of 0.4 dB each. The number N of WDM channels is N=13.

The results shown in FIG. 7 indicate that the power-regime indicator $R_\sigma$ increases when the operating conditions move from the linear regime (where the launch power is smaller than Pt) to a nonlinear regime (where the launch power is greater than Pt). However, in the deep nonlinear regime (where the launch power is greater than about $P_t+2$dBm), the power-regime indicator $R_\sigma$ decreases with the increase of the launch power. At the launch power of $P=P_t$, the power-regime indicator $R_\sigma$ has the value of $R_\sigma^{(Pt)} = 0.72$. It is also worth noting here that the latter value tends to increase with the number of PDL-causing devices in the link and with the amount of PDL per device.

Referring back to FIG. 6, at step **608**, power-regime monitor **500** operates to compare the value of $R_\sigma$ computed at step **606** with a reference value $R_0$. If $R_\sigma$ is smaller than the reference value $R_0$, then the processing of method **600** is directed to step **610**. Otherwise, the processing of method **600** is directed to step **612**.

In an example to aid understanding of the present invention, the reference value $R_0$ can be selected to be approximately the same as the value of $R_\sigma^{(Pt)}$ (also see FIG. 7). However, as already indicated above, $R_0$ is a parameter of method **600** that can be configuration-specific and/or system-specific. Through experimentation and simulation, it has been determined that, for

many practical systems, the value of $R_0 = 0.75$ can be used to obtain good results. From the provided description, a person of ordinary skill in the art will understand how to select the reference value $R_0$ for any specific system.

At step **610**, power-regime monitor **500** generates control signal $78_n$ that requests that the launch power be increased. The processing of method **600** is then directed back to step **602**.

At step **612**, power-regime monitor **500** generates control signal $78_n$ that requests that the launch power be decreased. The processing of method **600** is then directed back to step **602**.

In an example to aid understanding of the present invention, the power adjustments $\Delta P$ requested at steps **610** and **612** can be read from a preloaded look-up table (LUT). In some embodiments, the values stored in said LUT can be calculated, e.g., using the following approximations.

If $R_\sigma < 0.75$, then the corresponding increase $\Delta P$ of the launch power requested at step **610** can be computed in accordance with Eq. (6):

$$\otimes P \approx \left( \ln(3.6 R_\Gamma) \right)^{-1.2} \qquad (6)$$

If $R_\sigma \geq 0.75$, then the corresponding decrease $\Delta P$ of the launch power requested at step **612** can be computed in accordance with Eq. (7):

$$\otimes P \approx \sqrt{\frac{1}{\ln(3.6 R_\Gamma)}} \qquad (7)$$

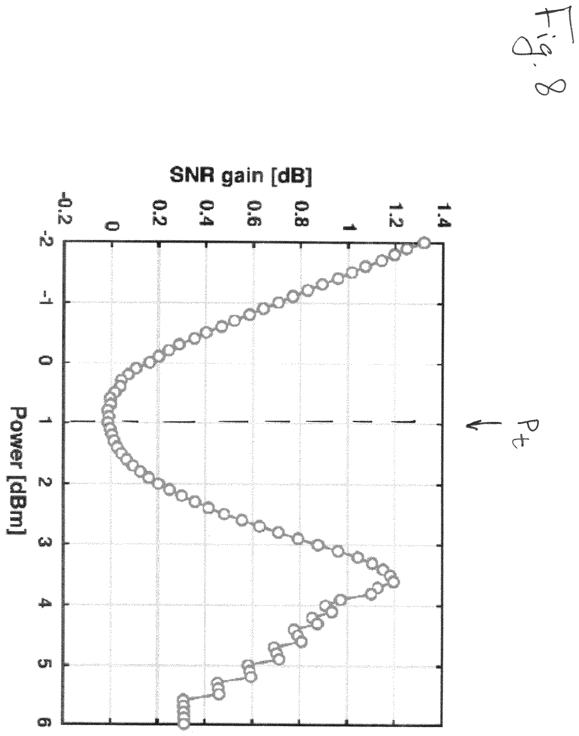

FIG. 8 graphically illustrates SNR gains that can be achieved upon launch-power adjustments of steps **610** and **612** (performed from the launch power indicated on the abscissa) according to an embodiment. More specifically, the results were computed based on the results of FIG. 7, assuming that the launch-power adjustments of steps **610** and **612** are performed in accordance with Eqs. (6) and (7), respectively. The results of FIG. 8 indicate that significant SNR gains can be achieved in this manner. Moreover, after several incremental power-launch adjustments performed using method **600** the resulting launch power tends to end up advantageously close to Pt.

According to an embodiment disclosed above, e.g., in the summary section and/or in reference to any one or any combination of some or all of FIGs. 1-8, provided is an apparatus comprising: a polarization-sensitive coherent optical receiver (e.g., $\mathbf{74_n}$, FIGs. 1, 3) that includes an optical hybrid (e.g., **160,** FIG. 1) and a plurality of light detectors (e.g., $\mathbf{161_1}$-$\mathbf{161_4}$, FIG. 3) connected to receive light outputted by the optical hybrid in response to an optical data signal (e.g., **130",** FIGs. 1, 3) applied thereto, the optical data signal having encoded thereon different respective data streams in each of first and second orthogonal polarizations thereof; and a digital signal processor (e.g., **170,** FIGs. 1, 5) configured to recover said respective data streams by processing digital samples (e.g., $\mathbf{168_1}$-$\mathbf{168_4}$, FIG. 3) representing electrical output signals (e.g., $\mathbf{162_1}$-$\mathbf{162_4}$, FIG. 3) generated by the light detectors in response to the received light; and wherein the digital signal processor comprises a power-regime monitor (e.g., **500,** FIG. 5) configured to: compute (e.g., at **602,** FIG. 6) first and second sets of values representing a measure of transmission quality of the optical data signal in a sequence of symbol periods, the first and second sets corresponding to the first and second orthogonal polarizations, respectively; and determine (e.g., at **610** or **612,** FIG. 6) a launch-power adjustment for the optical data signal using statistical characteristics of the values from said first and second sets (e.g., as determined at **604-606,** FIG. 6) wherein the power-regime monitor is configured to determine said statistical characteristics using third and fourth sets of values, the third set having smaller or higher values from the first and second sets in the symbol periods, and the fourth set having differences of the values from the first and second sets in the symbol periods (e.g., if the measure of transmission quality = SNR).

In some embodiments of the above apparatus, the polarization-sensitive coherent optical receiver is connected to receive the optical data signal through a fiber-optic link (e.g., **50,** FIG. 1) characterized by non-zero polarization-dependent loss; and wherein the digital signal processor is configured to compute the statistical characteristics in a manner sensitive to effects of said non-zero polarization-dependent loss.

In some embodiments of any of the above apparatus, the measure of transmission quality is one of the following: a quality factor $Q^2$; a Q value expressed in decibel; a bit-error rate; and a signal-to-noise ratio.

In some embodiments of any of the above apparatus, the power-regime monitor is configured to determine an absolute value (e.g., $\Delta P$, Eqs. (6)-(7)) of the launch-power adjustment based on variances of the third and fourth sets (e.g., in accordance with Eqs. (5)-(7)).

In some embodiments of any of the above apparatus, the power-regime monitor is configured to determine (e.g., at **608,** FIG. 6) a sign of the launch-power adjustment by computing an indicator value (e.g., $R_\sigma$ Eq. (5)) based on variances of the third and fourth sets and comparing the indicator value with a fixed reference value.

In some embodiments of any of the above apparatus, the power-regime monitor is configured to determine said statistical characteristics using third and fourth sets of values, the third set having higher values from the first and second sets in the symbol periods, and the fourth set having differences of the values from the first and second sets in the symbol periods (e.g., if the measure of transmission quality = BER).

In some embodiments of any of the above apparatus, the digital signal processor further comprises a symbol decoder (e.g., **350,** FIG. 5); and wherein the power-regime monitor is configured to compute the first and second sets based on decoding decisions of the symbol decoder (e.g., in accordance with Eq. (4)).

In some embodiments of any of the above apparatus, the digital signal processor further comprises a dispersion-compensation module (e.g., **320,** FIG. 5) and an electronic polarization demultiplexer (e.g., **320,** FIG. 5) connected upstream from the symbol decoder.

In some embodiments of any of the above apparatus, the apparatus further comprises: an optical transmitter (e.g., **14_n**, FIGs. 1, 2) connected to a distal end of a fiber-optic link (e.g., **50,** FIG. 1) to launch the optical data signal therefrom toward the polarization-sensitive coherent optical receiver; and an electronic optical-power controller (e.g., **80,** FIG. 1) configured to cause the optical transmitter to change a launch-power of the optical data signal in accordance with the launch-power adjustment determined by the power-regime monitor (e.g., using **78** and **84,** FIG. 1).

In some embodiments of any of the above apparatus, the electronic optical-power controller is further configured to set an optical gain of one or more optical amplifiers (e.g., 30, FIG. 1) in the fiber-optic link (e.g., using **82,** FIG. 1).

In some embodiments of any of the above apparatus, the apparatus further comprises a WDM transmitter (e.g., **12,** FIG. 1) that includes the optical transmitter.

In some embodiments of any of the above apparatus, the apparatus further comprises a WDM receiver (e.g., **62,** FIG. 1) that includes the polarization-sensitive coherent optical receiver.

According to another example embodiment disclosed above, e.g., in the summary section and/or in reference to any one or any combination of some or all of FIGs. 1-8, provided is a machine-implemented optical-power control method comprising the steps of: computing (e.g., at **602,** FIG. 6) first and second sets of values representing a measure of transmission quality of an optical data signal in a sequence of symbol periods, the optical data signal having encoded thereon different respective data streams in each of first and second orthogonal polarizations thereof, the first and second sets corresponding to the first and second orthogonal polarizations, respectively; converting (e.g., at **604,** FIG. 6) said first and second sets into third and fourth sets of values, the third set having smaller values from the first and second sets in the symbol periods, and the fourth set having differences of the values from the first and second sets in the symbol periods; and determining (e.g., at **610** or **612,** FIG. 6) a launch-power adjustment for the optical data signal based on variances of the third and fourth sets.

In some embodiments of the above method, the measure of transmission quality is one of the following: a quality factor $Q^2$; a Q value expressed in decibel; a bit-error rate; and a signal-to-noise ratio.

In some embodiments of any of the above methods, the step of determining comprises: computing an indicator value (e.g., $R_\sigma$, Eq. (5)) using the variances of the third and fourth sets; and determining (e.g., at **608,** FIG. 6) a sign of the launch-power adjustment based on a comparison of the indicator value with a fixed reference value.

In some embodiments of any of the above methods, the method further comprises the step of computing the first and second sets (e.g., in accordance with Eq. (4)) based on signal-decoding decisions directed at recovering said respective data streams from digital samples representing the two orthogonal polarizations of the optical data signal.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus comprising:

a polarization-sensitive coherent optical receiver ($74_n$) that includes an optical hybrid (160) and a plurality of light detectors ($161_1$-$161_4$) connected to receive light outputted by the optical hybrid in response to an optical data signal (130") applied thereto, the optical data signal having encoded thereon different respective data streams in each of first and second orthogonal polarizations thereof; and
a digital signal processor (170) configured to recover said respective data streams by processing digital samples ($168_1$-$168_4$) representing electrical output signals ($162_1$-$162_4$) generated by the light detectors in response to the received light; and
wherein the digital signal processor (170) comprises a power-regime monitor (500) configured to:

compute (602) first and second sets of values representing a measure of transmission quality of the optical data signal in a sequence of symbol periods, the first and second sets corresponding to the first and second orthogonal polarizations, respectively; and
determine (610/612) a launch-power adjustment for the optical data signal using statistical characteristics of the values from said first and second sets, wherein the power-regime monitor (500) is configured to determine said statistical characteristics using third and fourth sets of values, the third set having smaller or higher values from the first and second sets in the symbol periods, and the fourth set having differences of the values from the first and second sets in the symbol periods.

**2.** The apparatus of claim 1,

wherein the polarization-sensitive coherent optical receiver is connected to receive the optical data signal through a fiber-optic link (50) **characterized by** non-zero polarization-dependent loss; and

wherein the digital signal processor is configured to compute the statistical characteristics in a manner sensitive to effects of said non-zero polarization-dependent loss.

**3.** The apparatus of claim 1, wherein the measure of transmission quality is one of the following:

a quality factor $Q^2$;
a Q value expressed in decibel;
a bit-error rate; and
a signal-to-noise ratio.

**4.** The apparatus of claim 1, wherein the power-regime monitor is configured to determine an absolute value of the launch-power adjustment based on variances of the third and fourth sets.

**5.** The apparatus of claim 1, wherein the power-regime monitor is configured to determine a sign of the launch-power adjustment by computing an indicator value based on variances of the third and fourth sets and comparing the indicator value with a fixed reference value.

**6.** The apparatus of claim 1, wherein the power-regime monitor is configured to determine said statistical characteristics using third and fourth sets of values, the third set having higher values from the first and second sets in the symbol periods, and the fourth set having differences of the values from the first and second sets in the symbol periods.

**7.** The apparatus of claim 1,

wherein the digital signal processor further comprises a symbol decoder (350); and
wherein the power-regime monitor is configured to compute the first and second sets based on decoding decisions of the symbol decoder.

**8.** The apparatus of claim 7, wherein the digital signal processor further comprises a dispersion-compensation module (320) and an electronic polarization demultiplexer (320) connected upstream from the symbol decoder.

**9.** The apparatus of claim 1, further comprising:

an optical transmitter ($14_n$) connected to a distal end of a fiber-optic link to launch the optical data signal therefrom toward the polarization-sensitive coherent optical receiver; and
an electronic optical-power controller (80) configured to cause the optical transmitter to change a launch-power of the optical data signal in accordance with the launch-power adjustment determined by the power-regime monitor.

**10.** The apparatus of claim 9, wherein the electronic optical-power controller is further configured to set an optical gain of one or more optical amplifiers (30) in the fiber- optic link.

**11.** The apparatus of claim 9, further comprising one or both of:

a WDM transmitter (12) that includes the optical transmitter; and
a WDM receiver (62) that includes the polarization-sensitive coherent optical receiver.

**12.** A machine-implemented optical-power control method comprising:

computing (602) first and second sets of values representing a measure of transmission quality of an optical data signal in a sequence of symbol periods, the optical data signal having encoded thereon different respective data streams in each of first and second orthogonal polarizations thereof, the first and second sets corresponding to the first and second orthogonal polarizations, respectively;
converting (604) said first and second sets into third and fourth sets of values, the third set having smaller values from the first and second sets in the symbol periods, and the fourth set having differences of the values from the first and second sets in the symbol periods; and
determining (610/612) a launch-power adjustment for the optical data signal based on variances of the third and fourth sets.

**13.** The method of claim 12, wherein the determining comprises:

computing an indicator value using the variances of the third and fourth sets; and
determining a sign of the launch-power adjustment based on a comparison of the indicator value with a fixed reference value.

**14.** The method of claim 12, further comprising computing the first and second sets based on signal-decoding decisions directed at recovering said respective data streams from digital samples representing the two orthogonal polarizations of the optical data signal.

## Patentansprüche

**1.** Vorrichtung, die Folgendes umfasst:

einen polarisationsempfindlichen kohärenten optischen Empfänger ($74_n$), der eine optische Hybridschaltung (160) und eine Vielzahl von Lichtdetektoren ($161_1$-$161_4$) beinhaltet, die verbunden sind, um Licht zu empfangen, das von der optischen Hybridschaltung in Reaktion auf ein daran angelegtes optisches Datensignal (130") ausgegeben wird, wobei auf dem optischen Datensignal verschiedene jeweilige Datenströme in jeder einer ersten und einer zweiten orthogonalen Polarisation davon codiert sind; und
einen digitalen Signalprozessor (170), der dazu ausgelegt ist, die jeweiligen Datenströme durch Verarbeiten von digitalen Abtastwerten ($168_1$-$168_4$) wiederherzustellen, die elektrische Ausgangssignale ($162_1$-$162_4$) repräsentieren, die von den Lichtdetektoren in Reaktion auf das empfangene Licht erzeugt werden; und
wobei der digitale Signalprozessor (170) einen Leistungsregimemonitor (500) umfasst, der zu Folgendem ausgelegt ist:

Berechnen (602) eines ersten und eines zweiten Satzes von Werten, die ein Maß einer Übertragungsqualität des optischen Datensignals in einer Sequenz von Symbolperioden repräsentieren, wobei der erste und der zweite Satz der ersten bzw. der zweiten orthogonalen Polarisation entsprechen; und
Bestimmen (610/612) einer Startleistungsanpassung für das optische Datensignal unter Verwendung von statistischen Eigenschaften der Werte aus dem ersten und dem zweiten Satz, wobei der Leistungsregimemonitor (500) dazu ausgelegt ist, unter Verwendung eines dritten und eines vierten Satzes von Werten die statistischen Eigenschaften zu bestimmen, wobei der dritte Satz kleinere oder größere Werte als der erste und der zweite Satz in den Symbolperioden aufweist und wobei der vierte Satz Differenzen der Werte aus dem ersten und dem zweiten Satz in den Symbolperioden aufweist.

**2.** Vorrichtung nach Anspruch 1,

wobei der polarisationsempfindliche kohärente optische Empfänger verbunden ist, um das optische Datensignal über einen faseroptischen Link (50) zu empfangen, der durch einen polarisationsabhängigen Verlust von nicht null gekennzeichnet ist; und
wobei der digitale Signalprozessor dazu ausgelegt ist, die statistischen Eigenschaften in einer Weise zu berechnen, die für Effekte des polarisationsabhängigen Verlusts von nicht null empfindlich ist.

**3.** Vorrichtung nach Anspruch 1, wobei das Maß der Übertragungsqualität eines von Folgendem ist:

ein Qualitätsfaktor $Q^2$;
ein in Dezibel ausgedrückter Q-Wert;
eine Bitfehlerrate; und
ein Signal-Rauschen-Verhältnis.

**4.** Vorrichtung nach Anspruch 1, wobei der Leistungsregimemonitor dazu ausgelegt ist, einen Absolutwert der Startleistungsanpassung auf Basis von Varianzen des dritten und des vierten Satzes zu bestimmen.

**5.** Vorrichtung nach Anspruch 1, wobei der Leistungsregimemonitor dazu ausgelegt ist, durch Berechnen eines Indikatorwertes auf Basis von Varianzen des dritten und des vierten Satzes und Vergleichen des Indikatorwertes mit einem festen Referenzwert ein Vorzeichen der Startleistungsanpassung zu bestimmen.

**6.** Vorrichtung nach Anspruch 1, wobei der Leistungsregimemonitor dazu ausgelegt ist, unter Verwendung eines dritten und eines vierten Satzes von Werten die statistischen Eigenschaften zu bestimmen, wobei der dritte Satz größere Werte als der erste und der zweite Satz in den Symbolperioden aufweist und wobei der vierte Satz Differenzen der Werte aus dem ersten und dem zweiten Satz in den Symbolperioden aufweist.

**7.** Vorrichtung nach Anspruch 1,

wobei der digitale Signalprozessor ferner einen Symboldecodierer (350) umfasst; und
wobei der Leistungsregimemonitor dazu ausgelegt ist, den ersten und den zweiten Satz auf Basis von Decodierentscheidungen des Symboldecodierers zu berechnen.

**8.** Vorrichtung nach Anspruch 7, wobei der digitale Signalprozessor ein Dispersionskompensationsmodul (320) und einen elektronischen Polarisationsdemultiplexer (320), der stromaufwärts vom Symboldecodierer verbunden ist, umfasst.

**9.** Vorrichtung nach Anspruch 1, die ferner Folgendes umfasst:

einen optischen Sender ($14_n$), der mit einem distalen Ende eines faseroptischen Links verbunden ist, um das optische Datensignal von dort zum polarisationsempfindlichen kohärenten optischen Empfänger zu starten; und
eine elektronische optische Leistungssteuerung (80), die dazu ausgelegt ist, den optischen Sender zu veranlassen, eine Startleistung des optischen Datensignals gemäß der Startleistungsanpassung, die vom Leistungsregimemonitor bestimmt wird, zu ändern.

**10.** Vorrichtung von Anspruch 9, wobei die elektronische optische Leistungssteuerung ferner dazu ausgelegt ist, eine optische Verstärkung von einem oder mehreren optischen Verstärkern (30) im faseroptischen Link einzustellen.

**11.** Vorrichtung nach Anspruch 9, die ferner eines oder beides von Folgendem umfasst:

einen WDM-Sender (12), der den optischen Sender beinhaltet; und
einen WDM-Empfänger (62), der den polarisationsempfindlichen kohärenten optischen Empfänger beinhaltet.

**12.** Maschinenimplementiertes optisches Leistungssteuerverfahren, das Folgendes umfasst:

Berechnen (602) eines ersten und eines zweiten Satzes von Werten, die ein Maß einer Übertragungsqualität eines optischen Datensignals in einer Sequenz von Symbolperioden repräsentieren, wobei auf dem optischen Datensignal verschiedene jeweilige Datenströme in jeder der ersten und der zweiten orthogonalen Polarisation davon codiert sind, wobei der erste und der zweite Satz der ersten bzw. der zweiten orthogonalen Polarisation entsprechen;
Umwandeln (604) des ersten und des zweiten Satzes in Werte eines dritten und eines vierten Satzes, wobei der dritte Satz kleinere Werte als der erste und der zweite Satz in den Symbolperioden aufweist und wobei der vierte Satz Differenzen der Werte aus dem ersten und dem zweiten Satz in den Symbolperioden aufweist; und
Bestimmen (610/612) einer Startleistungsanpassung für das optische Datensignal auf Basis von Varianzen des dritten und des vierten Satzes.

**13.** Verfahren nach Anspruch 12, wobei das Bestimmen Folgendes umfasst:

Berechnen eines Indikatorwertes unter Verwendung der Varianzen des dritten und des vierten Satzes; und
Bestimmen eines Vorzeichens der Startleistungsanpassung auf Basis eines Vergleichs des Indikatorwertes mit einem festen Referenzwert.

**14.** Verfahren nach Anspruch 12, das ferner das Berechnen des ersten und des zweiten Satzes auf Basis von Signaldecodierentscheidungen umfasst, die auf das Wiederherstellen der jeweiligen Datenströme aus digitalen Abtastwerten ausgerichtet sind, die die zwei orthogonalen Polarisationen des optischen Datensignals repräsentieren.

**Revendications**

1. Appareil comprenant :

   un récepteur optique cohérent sensible à la polarisation ($74_n$) qui comporte un hybride optique (160) et une pluralité de détecteurs de lumière ($161_1$-$161_4$) connectés pour recevoir une lumière émise par l'hybride optique en réponse à un signal de données optiques (130'') qui lui est appliqué, différents flux de données respectifs étant codés sur le signal de données optiques dans chacune de ses première et deuxième polarisations orthogonales ; et
   un processeur de signal numérique (170) configuré pour récupérer lesdits flux de données respectifs en traitant des échantillons numériques ($168_1$-$168_4$) représentant des signaux de sortie électriques ($162_1$-$162_4$) générés par les détecteurs de lumière en réponse à la lumière reçue ; et
   dans lequel le processeur de signal numérique (170) comprend un moniteur de régime de puissance (500) configuré pour :

   calculer (602) des premier et deuxième ensembles de valeurs représentant une mesure de qualité d'émission du signal de données optiques dans une séquence de périodes de symboles, les premier et deuxième ensembles correspondant respectivement aux première et deuxième polarisations orthogonales ; et
   déterminer (610/612) un réglage de puissance de lancement pour le signal de données optiques à l'aide de caractéristiques statistiques des valeurs desdits premier et deuxième ensembles, dans lequel le moniteur de régime de puissance (500) est configuré pour déterminer lesdites caractéristiques statistiques à l'aide de troisième et quatrième ensembles de valeurs, le troisième ensemble ayant des valeurs plus petites ou plus élevées que les premier et deuxième ensembles dans les périodes de symboles, et le quatrième ensemble ayant des différences de valeurs par rapport aux premier et deuxième ensembles dans les périodes de symboles.

2. Appareil selon la revendication 1,

   dans lequel le récepteur optique cohérent sensible à la polarisation est connecté pour recevoir le signal de données optiques à travers une liaison de fibre optique (50) **caractérisée par** une perte dépendant d'une polarisation non nulle ; et
   dans lequel le processeur de signal numérique est configuré pour calculer les caractéristiques statistiques d'une manière sensible aux effets de ladite perte dépendant d'une polarisation non nulle.

3. Appareil selon la revendication 1, dans lequel la mesure de la qualité d'émission est l'une des suivantes :

   un facteur de qualité $Q^2$ ;
   une valeur Q exprimée en décibels ;
   un taux d'erreur binaire ; et
   un rapport signal/bruit.

4. Appareil selon la revendication 1, dans lequel le moniteur de régime de puissance est configuré pour déterminer une valeur absolue du réglage de puissance de lancement sur la base des variances des troisième et quatrième ensembles.

5. Appareil selon la revendication 1, dans lequel le moniteur de régime de puissance est configuré pour déterminer un signe du réglage de puissance de lancement en calculant une valeur d'indicateur sur la base des variances des troisième et quatrième ensembles, et en comparant la valeur d'indicateur à une valeur de référence fixe.

6. Appareil selon la revendication 1, dans lequel le moniteur de régime de puissance est configuré pour déterminer lesdites caractéristiques statistiques à l'aide de troisième et quatrième ensembles de valeurs, le troisième ensemble ayant des valeurs plus élevées que les premier et deuxième ensembles dans les périodes de symboles, et le quatrième ensemble ayant des différences de valeurs par rapport aux premier et deuxième ensembles dans les périodes de symboles.

7. Appareil selon la revendication 1,

   dans lequel le processeur de signal numérique comprend en outre un décodeur de symboles (350) ; et

dans lequel le moniteur de régime de puissance est configuré pour calculer les premier et deuxième ensembles sur la base de décisions de décodage du décodeur de symboles.

8.  Appareil selon la revendication 7, dans lequel le processeur de signal numérique comprend en outre un module de compensation de la dispersion (320) et un démultiplexeur de polarisation électronique (320) connecté en amont du décodeur de symboles.

9.  Appareil selon la revendication 1, comprenant en outre :

    un émetteur optique ($14_n$) connecté à une extrémité distale d'une liaison de fibre optique pour lancer à partir de là le signal de données optiques vers le récepteur optique cohérent sensible à la polarisation ; et
    un contrôleur de puissance optique électronique (80) configuré pour amener l'émetteur optique à modifier une puissance de lancement du signal de données optiques conformément au réglage de puissance de lancement déterminé par le moniteur de régime de puissance.

10. Appareil selon la revendication 9, dans lequel le contrôleur de puissance optique électronique est en outre configuré pour définir un gain optique d'un ou plusieurs amplificateurs optiques (30) dans la liaison par fibre optique.

11. Appareil selon la revendication 9, comprenant en outre un ou les deux parmi :

    un émetteur WDM (12) qui comporte l'émetteur optique ; et
    un récepteur WDM (62) qui comporte le récepteur optique cohérent sensible à la polarisation.

12. Procédé de contrôle de puissance optique mis en œuvre par une machine comprenant :

    le calcul (602) de premier et deuxième ensembles de valeurs représentant une mesure de qualité d'émission d'un signal de données optiques dans une séquence de périodes de symboles, différents flux de données respectifs étant codés sur le signal de données optiques dans chacune de ses première et deuxième polarisations orthogonales, les premier et deuxième ensembles correspondant respectivement aux première et deuxième polarisations orthogonales ;
    la conversion (604) desdits premier et deuxième ensembles en troisième et quatrième ensembles de valeurs, le troisième ensemble ayant des valeurs plus petites que les premier et deuxième ensembles dans les périodes de symboles, et le quatrième ensemble ayant des différences de valeurs par rapport aux premier et deuxième ensembles dans les périodes de symboles ; et
    la détermination (610/612) d'un réglage de puissance de lancement pour le signal de données optiques sur la base des variances des troisième et quatrième ensembles.

13. Procédé selon la revendication 12, dans lequel la détermination comprend :

    le calcul d'une valeur d'indicateur à l'aide des variances des troisième et quatrième ensembles ; et
    la détermination d'un signe du réglage de puissance de lancement sur la base d'une comparaison de la valeur d'indicateur à une valeur de référence fixe.

14. Procédé selon la revendication 12, comprenant en outre le calcul des premier et deuxième ensembles sur la base de décisions de décodage de signal visant à récupérer lesdits flux de données respectifs à partir d'échantillons numériques représentant les deux polarisations orthogonales du signal de données optiques.

Fig. 1

Fig. 2

$14_n$

Fig. 3

$74_n$

EP 3 675 390 B1

19

Fig. 4

Fig. 5
170

PRE-PROCESSING 310

$168_4$ $168_3$ $168_2$ $168_1$

$312_2$ $312_1$

DISPERSION COMPENSATION 320

$322_2$ $322_1$

2x2 MIMO EQUALIZER 330

$332_Y$ $332_X$

CARRIER RECOVERY 340

$342_Y$ $342_X$

SYMBOL DECODER 350

$352_Y$ $352_X$

POWER-REGIME MONITOR 500

$354_X$ $354_Y$

$78_n$

FEC DECODER 360

$352_Y$ $352_X$

102

Fig. 6

600

Compute sets $S_X$ and $S_Y$ of measures of transmission quality corresponding to two orthogonal polarizations — 602

Sort the values of sets $S_X$ and $S_Y$ into the better and poorer sets $S_B$ and $S_P$, and compute the difference set $S_D$ — 604

Compute power-regime indicator $R_\sigma$ based on statistical properties of the sets $S_P$ and $S_D$ — 606

$R_\sigma < R_0$? — 608

No

Yes

Request an increase of the optical launch power — 610

Request a decrease of the optical launch power — 612

22

Fig 7

R

simulation
fit (spline)

Power [dBm]

$P_t$

$R_\sigma(P_t)$

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8260154 B
- US 7636525 B
- US 7266310 B
- US 9020364 B
- US 20150372764

- US 7747177 B
- US 8073345 B
- US 9112614 B
- US 9762379 B